# EUROPEAN PATENT SPECIFICATION

(11) **EP 4 158 134 B1**
(45) Date of publication and mention of the grant of the patent: **17.09.2025**
(21) Application number: 21729051.9
(22) Date of filing: 26.05.2021
(51) Int. Cl.: E04H 1/12, G09F 15/00, A47F 5/08, E04B 2/74

(54) **STAND CONSTRUCTION FRAME WITH AT LEAST ONE STACKING BLOCK**
STAND-KONSTRUKTIONSRAHMEN MIT WENIGSTENS EINEM STAPELBLOCK
CADRE DE CONSTRUCTION DE STAND AVEC AU MOINS UN BLOC D'EMPILEMENT

(30) Priority: 26.05.2020 NL 2025677
(43) Date of publication of application: 05.04.2023
(73) Proprietor: Henry van Boekel B.V., 5236 EG 's-Hertogenbosch (NL)
(72) Inventor: VAN BOEKEL, Hermanus Adriana Petrus Maria, 5236 EG 'S-Hertogenbosch (NL)
(74) Representative: Algemeen Octrooi- en Merkenbureau B.V.
(86) International application number: PCT/NL2021/050332
(87) International publication number: WO 2021/242098

(56) References cited:
- WO-A1-2004/037051
- WO-A1-2004/046481
- US-A1- 2012 085 721
- US-A1- 2013 260 362

## Description

The present invention relates to an assembly of a stand construction frame and at least one stacking block placeable thereon such that a further stand construction frame can be stacked on the at least one stacking block placed on the stand construction frame.

The present invention more specifically relates to a solution for stacking stand construction frames in such a way that they can be transported between different locations robustly.

Such stand construction frames are constructed in the following manner. A stand construction frame comprises a rectangular framework formed by four box profiles. A (3D-)framework or stand, for example to be used for promotional purposes on an exhibition is formed from multiple stand construction frames.

The stand construction frames are not only used for the construction of stands on events such as exhibitions and exposés, but for example also in (pop-up) stores and meeting rooms. Such stand construction frames are known for example from US 2012/085721 A1, US 2013/260362 A1, WO 2004/046481 A1 or WO 2004/037051 A1.

To transport the stand construction frames, at present use is made of stacking blocks. These stacking blocks are provided at the corners of each stand construction frame and a further stand construction frame can be stacked thereon. Each stacking block can be compared with a corner protection such as for example mounted to a dining table to protect children when they fall against the dining table or bump into the (edge of the) dining table.

A problem during said transportation, is that it is often difficult for a stand constructor to stack the stand construction frames when preparing the stand construction frames for transportation purposes. Often the used stacking blocks will fall off of the frames or they are pushed off when a further stacking block is stacked on the first stacking block. This problem is more apparent when the size of the frame increases. Frames which in principle should not be carried by a single person are the biggest challenge in this respect.

It is an object of the present invention to therefore provide an assembly of a stand construction frame and at least one stacking block placeable thereon, wherein the further stand construction frame can easily be stacked on top of the stand construction frame, with the at least one stacking block placed therein.

According to a first aspect the invention provides an assembly of a stand construction frame and at least one stacking block placeable thereon such that a further stand construction frame can be stacked on the at least one stacking block placed on the stand construction frame;
wherein the stand construction frame comprises a rectangular framework formed by four box profiles and defining a panel plane, het framework comprising an edge protruding upwardly from the panel plane along an outer circumference of the framework and comprising a portion that is recessed with respect to the panel plane and borders the upwardly protruding edge, the recessed portion extending along said edge;
wherein the stacking block had a block-shaped base part, with a first contact surface and a second contact surface opposite thereof, and a positioning element protruding from the base part that is configured to be inserted into the recessed portion such that the first contact surface contacts the panel plane in a mounted condition, and wherein the second contact surface in the mounted condition extends beyond the protruding edge such that the further stand construction frame can be stacked on the second contact surface.

An advantage of the assembly of the stand construction frame and the at least one stacking block placeable thereon according to the present description is that the stacking block is placed on the stand construction frame robustly, such that it better remains at its position when a further stand construction frame is placed on the assembly of the stand construction frame and the at least one stacking block.

One of the reasons that this advantage is achieved is that the stacking block is kept at its position due to 1) the positioning element being inserted into the recessed portion such that a horizontal displacement of the stacking block is prevented, and 2) horizontal displacement of the stacking block is further limited due to the presence of the upwardly protruding edge.

When placing a further stand construction frame on the stand construction frame a horizontal force can act on the stacking block. The chance that said horizontal force results in a horizontal displacement of the stacking block is thus minimized by the above-mentioned aspects. This ensures that the stacking block cannot be pushed or tapped off of the stand construction frame by the further stand construction frame, while stacking the further stand construction frame on the stand construction frame.

Preferably four stacking blocks are placed in the stand construction frame, that is to say one stacking block in each corner of the stand construction frame.

In an embodiment the assembly comprises a stacking block wherein the positioning element at the base part is an edge. Such an edge can be a protruding edge which extend along a side of the base part in its entirety, or at least for a substantial part thereof.

An advantage thereof is that the stacking block can be placed more easily because the edge serves as an alignment tool for the insertion into the recessed portion. A further advantage is that the edge is less vulnerable than possible pins.

In a further embodiment the base part of the stacking block, when seen from above, when placed in the stand construction frame, perpendicular to the first contact surface, is at least triangular. An advantage thereof is that less material is needed to produce the stacking blocks. A further advantage is that a triangular stacking block can clarify to a stand constructor that such a stacking block is to be placed in a corner of the stand construction panel.

In a further embodiment the second contact surface of the stacking block, at a rectangular side, when seen from above perpendicular to the second contact surface, tapers towards the base part. An advantage thereof is that the further stand construction panel can more easily be slid onto the stacking block.

While placing the further stand construction panel on the stand construction panel, the further stand construction panel can be slid thereon. This means that the further stand construction panel slides over the stand construction panel, and thus contacts the stacking block that is placed in the stand construction panel. By the tapered edge present on the stacking block the further stand construction panel can easily end up on top of the stacking block. The tapered edge can function as a ramp, or inclination, over which the further stand construction panel can be slid upwards.

In a further embodiment the positioning element is provided at a rectangular side of the base part. An advantage thereof is that the stacking block can be positioned in a corner or in a side of the stand construction panel, when seen from above perpendicular to the panel plane.

In a further embodiment the positioning element is provided at two abutting rectangular sides of the base part. An advantage thereof is that the stacking block can be placed in a corner of the stand construction panel, when seen from above perpendicular to the panel plane, more stably and more easily. It further immediately clarifies to a stand constructor that such a stacking block is meant to be placed in a corner of a stand construction panel.

In a further embodiment the assembly comprises a stand construction panel, wherein the framework comprises hook-and-loop-means, oriented at the panel plane, and the base part comprises hook-and-loop-means, oriented at the first contact surface, for connecting the base part to the framework. An advantage thereof is that the stacking block better remains at its position during stacking the further stand construction frame on the assembly of the stand construction frame and the at least one stacking block.

In a further embodiment the stacking block has side surface having a length of 30.0-55.0 mm. An advantage thereof is that a larger surface is provided for the further stand construction panel to rest upon and not too much material is needed to manufacture the stacking block.

In a further embodiment the height of the base part is 12.0 mm. An advantage thereof is that the stacking block, expectedly, is as high as the protruding edge of the stand construction panel or protrudes beyond said edge, when standard, readily known stand construction panels, are used.

In a further embodiment the height of the positioning element is 6.0 mm. An advantage thereof is that the stacking block cannot be slid or pushed off of the stand construction frame by the further stand construction frame as the insertion depth is sufficient.

In a further embodiment the thickness of the position element is 3.5 mm. An advantage thereof is that the stacking block is more robust. That is to say, the positioning element will not easily break.

In a further embodiment the height of the tapered portion of the base part is 2.0 mm. An advantage thereof is that the stacking block has a sufficient contact surface for the further stand construction panel to rest thereon and the further stand construction panel can be slid on the stacking block more easily.

In a further embodiment the positioning element is provided with at least one ridge by which the positioning element is clamped in the recessed portion of the stand construction frame. An advantage thereof is that the stacking block, when placed on the stand construction frame, cannot slide over the stand construction frame or fall out of the stand construction frame.

Such a ridge can for example have a hemispheric shape such that the positioning element can be pressed in the recessed portion.

In a further embodiment the base part is provided with a protruding edge at the outer sides of the second contact surface lying in the panel plane, such that it is inserted in between the edges of two stand construction frames stacked on top of each other. An advantage thereof is that the stacking block protects the edges of the stand construction frames.

In a further embodiment the base part comprises hole arranged in the panel plane. An advantage thereof is that the stacking block can easily be removed from the stand construction frame.

According to a second aspect the invention provides a method for stacking multiple stand construction frames, comprising:
i) placing the stand construction frame on a surface;
ii) placing the stacking block on the stand construction frame, such that the protruding positioning element inserts into the recessed portion and the first contact surface contacts the panel plane;
iii) placing a further stand construction frame on the assembly of the stand construction frame and the stacking block such that the further stand construction frame is stacked on the second contact surface and the panel plane of the further stand construction frame contacts the second contact surface of the stacking block.

According to a third aspect the disclosure provides a stacking block for use in an assembly according to one of the above embodiments, wherein the stacking block has a block-shaped base part, with a first contact surface and an opposite second contact surface, and a positioning element protruding from the base part, configured to be inserted into the recessed portion in a mounted condition, such that the first contact surface contacts the panel plane, and wherein the second contact surface extends beyond the protruding edge in the mounted condition such that the further stand construction frame can be stacked on the second contact surface.

Other variations of the disclosed embodiments can be understood and carried out by one skilled in the art when carrying out the invention as claimed, from studying the figures, the description and the appended claims. In the claims the word "comprises" or "comprising" does not exclude other features or steps, and the indefinite article "a" does not exclude a plurality.

The scope of the present invention is defined by the appended claims. One or more objects of the invention are achieved by the appended claims.

### DEFINITIONS

The following definitions are used in present description and claims to define the said subject. Other terms not mentioned in the below are deemed commonly known in the state of the art.

"assembly" as used in the present description means: the combination of a stand construction frame and at least one stacking block placeable thereon.

"stand construction frame" as used in the present description means: a frame used for the construction of stands at e.g. expositions and exposés. Canvasses or panels can be hung in the frames. In the context of the patent application stand construction frame includes, amongst others, (modulair) stand construction system, frame system (having large openings), interior system, advertising system, event system, tube coupling system and box profile coupling system.

"rectangular framework" as used in the present description means: a framework having four sides and four straight corners wherein two opposite sides have the same length or wherein all four sides have the same length.

"box profile" as used in the present description means: an elongate, hollow tube.

"stacking block" as used in the present description means: a block that is used for stacking stand construction frames.

"corner protector" as used in the present description means: a corner- or block-shaped object which can be arranged on the corner or edge of e.g. a table for the protection of the table and/or of objects or persons bumping against the table.

"panel plane" as used in the present description means: the plane against which one looks perpendicularly when the four box profiles forming the framework lie on a surface.

"block-shaped base part" as used in the present description means: the part of the stacking block which, in the mounted condition on the stand construction frame, lies on the panel plane of the stand construction frame.

"first contact surface" as used in the present description means: the surface at the side of the base part from which the positioning element protrudes.

"second contact surface" as used in the present description means: the side opposite of the first contact surface.

"positioning element" as used in the present description means: the part of the stacking block that, in the mounted condition on the stand construction frame, is inserted into the recessed portion of the stand construction frame and ensures that the stacking block remains at its position.

"rectangular side" as used in the present description means: the side of the second contact surface of the base part, when seen from above perpendicular to the second contact surface, that encloses a straight angle with at least another side of the second contact surface.

"tapered side" as used in the present description means: the side of the second contact surface of the base part, when seen from above perpendicular to the second contact surface, that does not enclose a straight angle with any other side of the second contact surface.

### DESCRIPTION OF THE FIGURES

The present invention will be described in the below with reference to the attached figures, wherein embodiments of the present invention are shown and wherein same reference numerals indicate same or like elements.
Figure 1 is a schematic representation of a stand construction frame according to the present invention.
Figure 2 is a schematic representation of a stacking block according to the present invention.
Figure 3 is a schematic representation of a further stacking block according to the present invention.

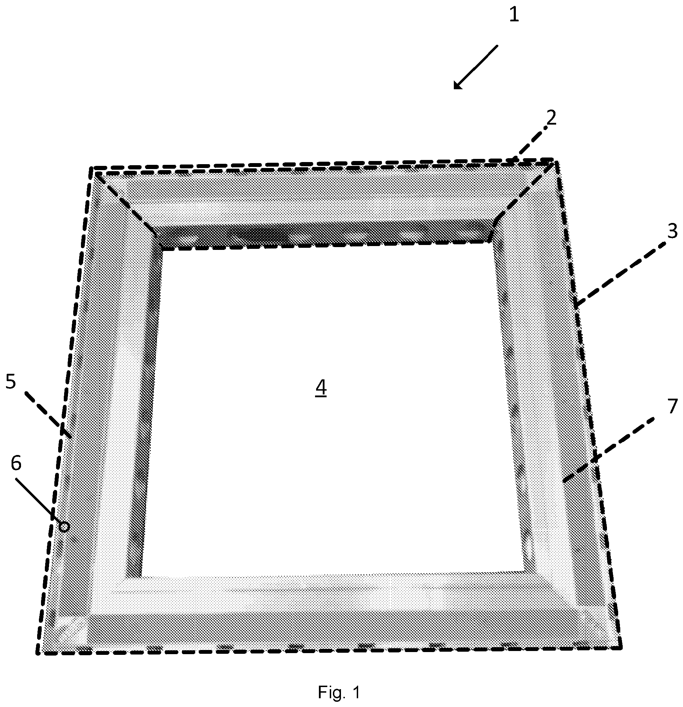

As indicated in the above figure 1 shows a schematic representation of the stand construction frame 1 according to the present invention.

The stand construction frame comprises four box profiles, the box profiles being indicated with reference numeral 2. Thereby a rectangular framework 3 is provided which defines a panel plane 4. Such stand construction panels are used to, for example, frame a poster or the like.

The framework 3 comprises, along an outer circumference thereof an edge 5 that protrudes from the panel plane. The protruding edge 5 thus protrudes beyond the panel plane 4. Additionally the framework comprises a portion 6 that is recessed with respect to the panel plane 4, bordering the protruding edge 5 and extending along said edge. This recessed portion 6 according to the present invention is used for inserting the stacking block, as explained in the below.

The stand construction panel 1 can be made of any type of material. Preferably the stand construction panel 1 is made of aluminium or another robust material with a long lifespan.

In this particular example the stand construction panel 1 has a shape that resembles a square. Obviously the stand construction panel 1 may comprise any rectangular shape.

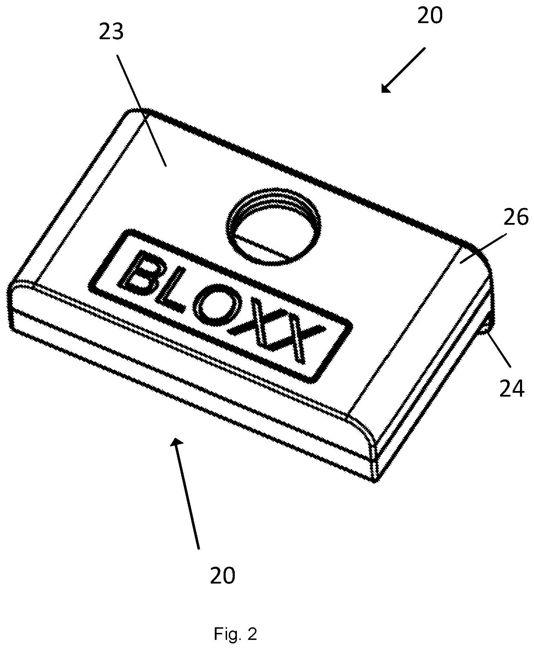

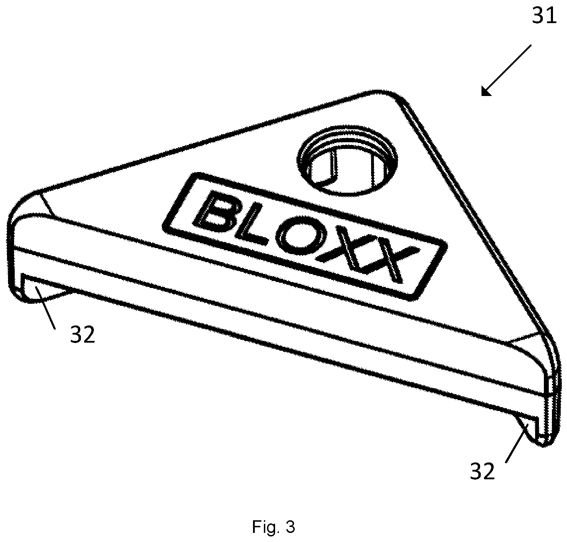

Further visible is that stand construction panel 1 has been provided with hook-and-loop connectors 7, more specifically Velcro. In this particular case Velcro is arranged on each box profile 2. This Velcro can be used to tightly hang the poster. This Velcro can have another purpose too, as will be explained with reference to figures 2 and 3.

Figure 2 is a schematic representation of a stacking block 20 according to the present disclosure.

The function of the stacking block is to ensure that stand construction panels can be stacked on top of each other with great ease. One, or more, stacking blocks are therein placed in a first stand construction panel and a further stand construction panel is subsequently stacked on the stacking blocks placed in the first stand construction panel. This ensures that the stand construction panels need not be stacked directly on top of each other as practice has shown that this can form an unstable stack.

The stacking block 20 has a block-shaped base part 28, with a first contact surface 22 and an opposite second contact surface 23. A positioning element 24 protrudes from the base part 28. In this specific example the positioning element 24 is embodied as an edge / wall which extends along an entire side of the block-shaped base part 28.

The positioning element 24 is configured to be inserted into the recessed portion 6 of the stand construction panel 1 in the mounted condition, such that the first contact surface 22 of the stacking block contacts the panel plane 4 of the stand construction panel 1.

Preferably the thickness of the positioning element 24 matches the thickness of the recessed portion 6 such that the stacking block 20 can be placed in the stand construction panel 1 firmly.

When the stacking block 20 is placed in the stand construction panel 1, the second contact surface extends beyond the protruding edge 5. The stacking block 1 is effectively thicker than the height of edge 5. Preferably the second contact surface thus extends beyond the protruding edge 5 such that space is provided for a further protruding edge 5 of a further stand construction panel. This prevents that the further stand construction panel contacts the stand construction panel 1 when these are stacked on top of each other.

The second contact surface 23 tapers towards the base part, at a rectangular side, when seen from above perpendicular to the second contact surface 23. This is indicated with reference number 26. The further stand construction panel, which is to be stacked on the stand construction panel, can herewith be pushed against the stacking block 20, wherein the tapered edge 26 assists in placing the stacking block 20 on the further stacking block 20.

Further the stacking block 20 can be provided with hook-and-loop means, e.g. Velcro, at the bottom side thereof, that is at the first contact surface 22, such that the stacking block 20 can be placed on the stand construction panel robustly and firmly.

The stacking block of figure 2 can be used in a corner, but also along a side of the stand construction panel 1.

Figure 3 is a schematic representation of a further stacking block 31 according to the present disclosure.

The stacking block 31 is meant for use in an assembly according to one of the preceding examples, wherein the stacking block 31 has a block-shaped base part, having a first contact surface and an opposite second contact surface, and a positioning element protruding from the base part configured to be inserted into the recessed portion in the mounted condition such that the first contact surface contacts the panel plane, and wherein the second contact surface extends beyond the protruding edge in the mounted condition such that the further stand construction frame can be stacked on the second contact surface.

This specific stacking block 31 is meant to be placed in a corner of a stand construction panel 1. This can be seen as the positioning means 32 are arranged in a corner as well.

The present invention is not limited to the examples as described in the above with reference to the figures. The scope of the present invention is defined by the appended claims.

## Claims

1. An assembly of a stand construction frame (1) and at least one stacking block (20, 31) placeable thereon such that a further stand construction frame (1) can be stacked on the at least one stacking block (20, 31) placed on the stand construction frame (1);
wherein the stand construction frame (1) comprises a rectangular framework (3) formed by four box profiles (2) and defining a panel plane (4), the framework (3) comprising an edge (5) protruding upwardly from the panel plane (4) along an outer circumference of the framework (3) and comprising a portion (6) that is recessed with respect to the panel plane (4) and borders the upwardly protruding edge (5), the recessed portion (6) extending along said edge (5);
wherein the stacking block (20, 31) has a block-shaped base part (28), with a first contact surface (22) and a second contact surface (23) opposite thereof, and a positioning element (24, 32) protruding from the base part (28) that is configured to be inserted into the recessed portion (6) such that the first contact surface (22) contacts the panel plane (4) in a mounted condition, and wherein the second contact surface (23) in the mounted condition extends beyond the protruding edge (5) such that the further stand construction frame (1) can be stacked on the second contact surface (23).

2. The assembly according to claim 1, **characterised, in that** the positioning element (24, 28) at the base part (28) is an edge.

3. The assembly according to any one of the preceding claims, **characterised, in that** the base part (28), when seen from above, when placed in the stand construction frame (1), perpendicular to the first contact surface (22), is at least triangular.

4. The assembly according to any one of the preceding claims, **characterised, in that** the second contact surface (23) at a rectangular side of the base part (28), when seen from above perpendicular to the second contact surface (23), tapers towards the base part (28).

5. The assembly according to any one of the preceding claims, **characterised, in that** the second contact surface (23) at a tapered side (26) of the base part (28), when seen from above perpendicular to the second contact surface (23), has a straight end towards the base part (28).

6. The assembly according to any one of the preceding claims, **characterised, in that** the positioning element (24) is provided at the rectangular side of the base part (28).

7. The assembly according to any one of the preceding claims, **characterised, in that** the positioning element (24) is provided at two abutting rectangular sides of the base part (28).

8. The assembly according to any one of the preceding claims, **characterised, in that** the framework (3) comprises hook-and-loop means (7), oriented in the panel plane (4), and the base part (28) comprises hook-and-loop means, oriented on the first contact surface (22), for connecting the base part (28) to the framework (3).

9. The assembly according to any one of the preceding claims, **characterised, in that** the stacking block (20 ,31) has side surfaces (28) having a length of 30.0-55.0 mm.

10. The assembly according to any one of the preceding claims, **characterised, in that** the height of the base part (28) is 12.0 mm.

11. The assembly according to any one of the preceding claims, **characterised, in that** the height of the positioning element (24, 32) is 6.0 mm.

12. The assembly according to any one of the preceding claims, **characterised, in that** the thickness of the positioning element (24, 32) is 3.5 mm.

13. The assembly according to claim 4, **characterised, in that** the height of the tapered portion (26) of the base part (28) is 2.0 mm.

14. The assembly according to any one of the preceding claims, **characterised, in that** the positioning element (24, 32) is provided with at least one ridge by which the positioning element (24, 32) is clamped in the recessed portion (6) of the stand construction frame (1).

15. A method for stacking multiple stand construction frames (1), wherein use is made of an assembly according to any one of the preceding claims, comprising:
i) placing the stand construction frame (1) on a surface;
ii) placing the stacking block (20, 31) on the stand construction frame (1), such that the protruding positioning element (24, 32) inserts into the recessed portion (6) and the first contact surface (22) contacts the panel plane (4);
iii) placing a further stand construction frame (1) on the assembly of the stand construction frame (1) and the stacking block (24, 32) such that the further stand construction frame (1) is stacked on the second contact surface (22) and the panel plane (4) of the further stand construction frame (1) contacts the second contact surface (23) of the stacking block (20, 31).

## Patentansprüche

1. Anordnung aus einem Standbaurahmen (1) und mindestens einem Stapelblock (20, 31), der derart darauf platzierbar ist, dass ein weiterer Standbaurahmen (1) auf den mindestens einen auf dem Standbaurahmen (1) platzierten Stapelblock (20, 31) gestapelt werden kann;
wobei der Standbaurahmen (1) eine rechteckige Rahmenstruktur (3) umfasst, die durch vier Kastenprofile (2) gebildet ist und eine Plattenebene (4) definiert, wobei die Rahmenstruktur (3) eine Kante (5) umfasst, die von der Plattenebene (4) entlang eines Außenumfangs der Rahmenstruktur (3) nach oben vorsteht und einen Abschnitt (6) umfasst, der in Bezug auf die Plattenebene (4) vertieft ist und an die nach oben vorstehende Kante (5) angrenzt, wobei sich der vertiefte Abschnitt (6) entlang der Kante (5) erstreckt;
wobei der Stapelblock (20, 31) einen blockförmigen Basisteil (28) mit einer ersten Kontaktfläche (22) und einer zweiten Kontaktfläche (23) gegenüber davon und ein Positionierelement (24, 32), das von dem Basisteil (28) vorsteht, aufweist, das dazu ausgelegt ist, in den vertieften Abschnitt (6) derart eingeführt zu werden, dass die erste Kontaktfläche (22) in einem montierten Zustand die Plattenebene (4) kontaktiert, und wobei sich die zweite Kontaktfläche (23) im montierten Zustand derart über die vorstehende Kante (5) hinaus erstreckt, dass der weitere Standbaurahmen (1) auf der zweiten Kontaktfläche (23) gestapelt werden kann.

2. Anordnung nach Anspruch 1, **dadurch gekennzeichnet, dass** das Positionierelement (24, 28) am Basisteil (28) eine Kante ist.

3. Anordnung nach einem der vorhergehenden Ansprüche, **dadurch gekennzeichnet, dass** der Basisteil (28) bei Ansicht von oben bei Platzierung im Standbaurahmen (1) senkrecht zur ersten Kontaktfläche (22) zumindest dreieckig ist.

4. Anordnung nach einem der vorhergehenden Ansprüche, **dadurch gekennzeichnet, dass** sich die zweite Kontaktfläche (23) an einer rechteckigen Seite des Basisteils (28) bei Ansicht von oben senkrecht zur zweiten Kontaktfläche (23) zum Basisteil (28) hin verjüngt.

5. Anordnung nach einem der vorhergehenden Ansprüche, **dadurch gekennzeichnet, dass** die zweite Kontaktfläche (23) an einer verjüngten Seite (26) des Basisteils (28) bei Ansicht von oben senkrecht zur zweiten Kontaktfläche (23) ein gerades Ende zum Basisteil (28) hin aufweist.

6. Anordnung nach einem der vorhergehenden Ansprüche, **dadurch gekennzeichnet, dass** das Positionierelement (24) an der rechteckigen Seite des Basisteils (28) bereitgestellt ist.

7. Anordnung nach einem der vorhergehenden Ansprüche, **dadurch gekennzeichnet, dass** das Positionierelement (24) an zwei aneinanderstoßenden rechteckigen Seiten des Basisteils (28) bereitgestellt ist.

8. Anordnung nach einem der vorhergehenden Ansprüche, **dadurch gekennzeichnet, dass** die Rahmenstruktur (3) in der Plattenebene (4) ausgerichtete Klettmittel (7) umfasst, und der Basisteil (28) auf der ersten Kontaktfläche (22) ausgerichtete Klettmittel zum Verbinden des Basisteils (28) mit der Rahmenstruktur (3) umfasst.

9. Anordnung nach einem der vorhergehenden Ansprüche, **dadurch gekennzeichnet, dass** der Stapelblock (20, 31) Seitenflächen (28) mit einer Länge von 30,0-55,0 mm aufweist.

10. Anordnung nach einem der vorhergehenden Ansprüche, **dadurch gekennzeichnet, dass** die Höhe des Basisteils (28) 12,0 mm beträgt.

11. Anordnung nach einem der vorhergehenden Ansprüche, **dadurch gekennzeichnet, dass** die Höhe des Positionierelements (24, 32) 6,0 mm beträgt.

12. Anordnung nach einem der vorhergehenden Ansprüche, **dadurch gekennzeichnet, dass** die Dicke des Positionierelements (24, 32) 3,5 mm beträgt.

13. Anordnung nach Anspruch 4, **dadurch gekennzeichnet, dass** die Höhe des verjüngten Abschnitts (26) des Basisteils (28) 2,0 mm beträgt.

14. Anordnung nach einem der vorhergehenden Ansprüche, **dadurch gekennzeichnet, dass** das Positionierelement (24, 32) mit mindestens einer Erhöhung versehen ist, durch die das Positionierelement (24, 32) in den vertieften Abschnitt (6) des Standbaurahmens (1) geklemmt ist.

15. Verfahren zum Stapeln mehrerer Standbaurahmen (1), wobei von einer Anordnung nach einem der vorhergehenden Ansprüche Gebrauch gemacht wird, umfassend:
i) Platzieren des Standbaurahmens (1) auf einer Oberfläche;
ii) Platzieren des Stapelblocks (20, 31) auf dem Standbaurahmen (1) derart, dass das vorstehende Positionierelement (24, 32) in den vertieften Abschnitt (6) eingeführt wird und die erste Kontaktfläche (22) die Plattenebene (4) kontaktiert;
iii) Platzieren eines weiteren Standbaurahmens (1) auf der Anordnung aus dem Standbaurahmen (1) und dem Stapelblock (24, 32) derart, dass der weitere Standbaurahmen (1) auf der zweiten Kontaktfläche (22) gestapelt wird und die Plattenebene (4) des weiteren Standbaurahmens (1) die zweite Kontaktfläche (23) des Stapelblocks (20, 31) kontaktiert.

## Revendications

1. Ensemble d'un cadre de construction de support (1) et d'au moins un bloc d'empilement (20, 31) pouvant être placé sur ce dernier de sorte qu'un autre cadre de construction de support (1) peut être empilé sur l'au moins un bloc d'empilement (20, 31) placé sur le cadre de construction de support (1) ;
dans lequel le cadre de construction de support (1) comprend une ossature rectangulaire (3) formée par quatre profils de boîte (2) et délimitant un plan de panneau (4), l'ossature (3) comprenant un bord (5) faisant saillie vers le haut du plan de panneau (4) le long d'une circonférence extérieure de l'ossature (3) et comprenant une partie (6) qui est en retrait par rapport au plan de panneau (4) et qui borde le bord (5) faisant saillie vers le haut, la partie en retrait (6) s'étendant le long dudit bord (5) ;
dans lequel le bloc d'empilement (20, 31) présente une partie de base (28) en forme de bloc, avec une première surface de contact (22) et une seconde surface de contact (23) opposée à cette dernière, et un élément de positionnement (24, 32) faisant saillie de la partie de base (28) qui est configuré pour être inséré dans la partie en retrait (6) de sorte que la première surface de contact (22) entre en contact avec le plan de panneau (4) dans un état monté, et dans lequel la seconde surface de contact (23) à l'état monté s'étend au-delà du bord (5) faisant saillie de sorte que l'autre cadre de construction de support (1) peut être empilé sur la seconde surface de contact (23).

2. Ensemble selon la revendication 1, **caractérisé en ce que** l'élément de positionnement (24, 28) au niveau de la partie de base (28) est un bord.

3. Ensemble selon l'une quelconque des revendications précédentes, **caractérisé en ce que** la partie de base (28), vue de dessus, lorsqu'elle est placée dans le cadre de construction de support (1), perpendiculairement à la première surface de contact (22), est au moins triangulaire.

4. Ensemble selon l'une quelconque des revendications précédentes, **caractérisé en ce que** la seconde surface de contact (23) sur un côté rectangulaire de la partie de base (28), vue de dessus perpendiculairement à la seconde surface de contact (23), s'effile vers la partie de base (28).

5. Ensemble selon l'une quelconque des revendications précédentes, **caractérisé en ce que** la seconde surface de contact (23) sur un côté effilé (26) de la partie de base (28), vue de dessus perpendiculairement à la seconde surface de contact (23), présente une extrémité droite vers la partie de base (28).

6. Ensemble selon l'une quelconque des revendications précédentes, **caractérisé en ce que** l'élément de positionnement (24) est prévu sur le côté rectangulaire de la partie de base (28).

7. Ensemble selon l'une quelconque des revendications précédentes, **caractérisé en ce que** l'élément de positionnement (24) est prévu sur deux côtés rectangulaires en butée de la partie de base (28).

8. Ensemble selon l'une quelconque des revendications précédentes, **caractérisé en ce que** l'ossature (3) comprend des moyens auto-agrippants (7), orientés dans le plan de panneau (4), et que la partie de base (28) comprend des moyens auto-agrippants, orientés sur la première surface de contact (22), pour relier la partie de base (28) à l'ossature (3).

9. Ensemble selon l'une quelconque des revendications précédentes, **caractérisé en ce que** le bloc d'empilement (20, 31) présente des surfaces latérales (28) ayant une longueur de 30,0-55,0 mm.

10. Ensemble selon l'une quelconque des revendications précédentes, **caractérisé en ce que** la hauteur de la partie de base (28) est de 12,0 mm.

11. Ensemble selon l'une quelconque des revendications précédentes, **caractérisé en ce que** la hauteur de l'élément de positionnement (24, 32) est de 6,0 mm.

12. Ensemble selon l'une quelconque des revendications précédentes, **caractérisé en ce que** l'épaisseur de l'élément de positionnement (24, 32) est de 3,5 mm.

13. Ensemble selon la revendication 4, **caractérisé en ce que** la hauteur de la partie effilée (26) de la partie de base (28) est de 2,0 mm.

14. Ensemble selon l'une quelconque des revendications précédentes, **caractérisé en ce que** l'élément de positionnement (24, 32) est pourvu d'au moins une nervure par laquelle l'élément de positionnement (24, 32) est serré dans la partie en retrait (6) du cadre de construction de support (1).

15. Procédé d'empilement de plusieurs cadres de construction de support (1), dans lequel il est fait usage d'un ensemble selon l'une quelconque des revendications précédentes, comprenant :
i) le placement du cadre de construction de support (1) sur une surface ;
ii) le placement du bloc d'empilement (20, 31) sur le cadre de construction de support (1), de sorte que l'élément de positionnement (24, 32) faisant saillie s'insère dans la partie en retrait (6) et que la première surface de contact (22) entre en contact avec le plan de panneau (4) ;
iii) le placement d'un autre cadre de construction de support (1) sur l'ensemble du cadre de construction de support (1) et du bloc d'empilement (24, 32) de sorte que l'autre cadre de construction de support (1) est empilé sur la seconde surface de contact (22) et que le plan de panneau (4) de l'autre cadre de construction de support (1) entre en contact avec la seconde surface de contact (23) du bloc d'empilement (20, 31).
